# EUROPEAN PATENT APPLICATION

(11) **EP 4 492 703 A1**
(43) Date of publication of application: **15.01.2025**
(21) Application number: 22930221.1
(22) Date of filing: 07.03.2022
(51) Int. Cl.: H04B 7/06, H04W 36/00

(54) **ANTENNA SWITCHING CAPABILITY REPORTING METHOD AND APPARATUS USING SAME**

(71) Applicant: Beijing Xiaomi Mobile Software Co., Ltd., Beijing 100085 (CN)
(72) Inventor: GAO, Xueyuan, Beijing 100085 (CN)
(74) Representative: Gunzelmann, Rainer
(86) International application number: PCT/CN2022/079608
(87) International publication number: WO 2023/168575

(57) **Abstract**

Disclosed in the embodiments of the present application are an antenna switching capability reporting method and an apparatus using same. The method comprises: reporting antenna switching capability indication information to a network device, wherein the indication information is used for indicating that a terminal device supports an antenna switching configuration of at most eight transport (Tx) antennas. The present application solves the problem of how to report the switching capability when the number of Tx antennas for the uplink of a terminal device is increased to eight; and defines a new means for reporting that a terminal device supports 8 Tx. By means of reporting antenna switching capability indication information to a network device, the network device can configure a suitable SRS resource for the terminal device according to a reported antenna switching capability indicating that the terminal device supports 8 Tx.

## Description

### TECHNICAL FIELD

The present disclosure relates to a communication field, and in particular to a method and apparatus for reporting an antenna switching capability.

### BACKGROUND

In order to adapt to current services and scenarios, a terminal may need to switch an antenna switching configuration, and report an antenna switching capability to a network device, so that the network device can configure a corresponding sounding reference signal (SRS) resource according to the ability reported by the terminal. In the current protocol, the terminal only supports at most a transmission of uplink four layers and downlink eight layers, and there is no method for reporting the antenna switching capability which supports eight transmit antennas (Txs).

### SUMMARY

Embodiments of the present disclosure provide a method and apparatus for reporting an antenna switching capability, which solves a problem of how to report a switching capability when an uplink transmission of a terminal is enhanced to eight transmit antennas, and defines a new reporting method for the terminal supporting 8 Txs. By reporting indication information of the antenna switching capability to a network device, the network device may configure a proper SRS resource for the terminal according to the information that the terminal supports the antenna switching capability of 8 Txs.

In a first aspect, an embodiment of the present disclosure provides a method for reporting an antenna switching capability, which is performed by the terminal. The method includes: reporting indication information of the antenna switching capability to the network device, in which the indication information is configured to indicate that the terminal supports an antenna switching configuration of at most eight Txs.

According to the method for reporting the antenna switching capability of the embodiment of the present disclosure, the problem of how to report the switching capability when the uplink transmission of the terminal is enhanced to eight transmit antennas is solved, and the new reporting method for the terminal supporting 8 Txs is defined. By reporting the indication information of the antenna switching capability to the network device, the network device may configure a proper SRS resource for the terminal according to the information that the terminal supports the antenna switching capability of 8 Txs.

In a second aspect, an embodiment of the present disclosure provides a method for reporting an antenna switching capability, which is performed by the network device. The method includes: receiving the indication information of the antenna switching capability reported by the terminal, in which the indication information is configured to indicate that the terminal supports the antenna switching configuration of at most eight Txs.

According to the method for reporting the antenna switching capability of the embodiment of the present disclosure, the problem of how to report the switching capability when the uplink transmission of the terminal is enhanced to eight transmit antennas is solved, and the new reporting method for the terminal supporting 8 Txs is defined. By receiving the indication information of the antenna switching capability reported by the terminal, the network device may configure a proper SRS resource for the terminal according to the information that the terminal supports the antenna switching capability of 8 Txs.

In a third aspect, an embodiment of the present disclosure provides a communication apparatus. The communication apparatus can implement part or all of functions of the terminal described in the examples of the method of the first aspect above, for example, the communication apparatus can have the functions of the embodiments of the present disclosure in part or all, or have the functions for separately implementing any one of the embodiments of the present disclosure. The functions can be implemented by a hardware or by executing a corresponding software by the hardware. The hardware or the software includes one or more units or modules corresponding to the above functions.

In an implementation, the structure of the communication apparatus can include a transceiving module and a processing module, the processing module can be configured to support the communication apparatus to implement the corresponding functions in the above method. The transceiving module is configured to support a communication between the communication apparatus and other devices. The communication apparatus can further include a memory module, and the memory module is configured to couple with the transceiving module and the processing module, and is stored with necessary computer programs and data of the communication apparatus.

As an example, the processor module can be a processor, the transceiving module can be a transceiver or a communication interface, and the memory module can be a memory.

In a fourth aspect, an embodiment of the present disclosure provides another communication apparatus. The communication apparatus can implement part or all of functions of the network device described in the examples of the method of the second aspect above, for example the communication apparatus can have the functions of the embodiments of the present disclosure in part or all, or have the functions for separately implementing any one of the embodiments of the present disclosure. The functions can be implemented by a hardware or by executing a corresponding software by the hardware. The hardware or the software includes one or more units or modules corresponding to the above functions.

In an implementation, the structure of the communication apparatus can include a transceiving module and a processing module, the processing module can be configured to support the communication apparatus to implement the corresponding functions in the above method. The transceiving module is configured to support a communication between the communication apparatus and other devices. The communication apparatus can further include a memory module, and the memory module is configured to couple with the transceiving module and the processing module, and is stored with necessary computer programs and data of the communication apparatus.

As an example, the processor module can be a processor, the transceiving module can be a transceiver or a communication interface, and the memory module can be a memory transceiving module.

In a fifth aspect, an embodiment of the present disclosure provides a communication apparatus. The communication apparatus includes a processor, and when the processor calls a computer program in a memory, the method of the first aspect above is implemented.

In a sixth aspect, an embodiment of the present disclosure provides a communication apparatus. The communication apparatus includes a processor, and when the processor calls a computer program in a memory, the method of the second aspect above is implemented.

In a seventh aspect, an embodiment of the present disclosure provides a communication apparatus. The communication apparatus includes a processor and a memory, the memory is stored with computer programs, and the processor executes the computer programs stored in the memory to make the communication apparatus implement the method of the first aspect above.

In an eighth aspect, an embodiment of the present disclosure provides a communication apparatus. The communication apparatus includes a processor and a memory, the memory is stored with computer programs, and the processor executes the computer programs stored in the memory to make the communication apparatus implement the method of the second aspect above.

In a ninth aspect, an embodiment of the present disclosure provides a communication apparatus. The communication apparatus includes a processor and an interface circuit, the interface circuit is configured to receive code instructions and to transmit the code instructions to the processor, and the processor is configured to run the code instructions to make the communication apparatus implement the method of the first aspect above.

In a tenth aspect, an embodiment of the present disclosure provides a communication apparatus. The communication apparatus includes a processor and an interface circuit, the interface circuit is configured to receive code instructions and to transmit the code instructions to the processor, and the processor is configured to run the code instructions to make the communication apparatus implement the method of the second aspect above.

In an eleventh aspect, an embodiment of the present disclosure provides a computer readable storage medium, configured to store instructions used by the terminal above. When the instructions are executed, the terminal is caused to implement the method of the first aspect above.

In a twelfth aspect, an embodiment of the present disclosure provides a computer readable storage medium, configured to store instructions used by the network device above. When the instructions are executed, the network device is caused to implement the method of the second aspect above.

### BRIEF DESCRIPTION OF THE DRAWINGS

In order to clearly illustrate technical solutions in embodiments of the present disclosure or in the background, drawings to be used in embodiments of the present disclosure or in the background will be described below.
FIG. 1 is a schematic diagram illustrating an architecture of a communication system provided by an embodiment of the present disclosure;
FIG. 2 is a flowchart illustrating a method for reporting an antenna switching capability provided by an embodiment of the present disclosure;
FIG. 3 is a flowchart illustrating a method for reporting an antenna switching capability provided by an embodiment of the present disclosure;
FIG. 4 is a flowchart illustrating a method for reporting an antenna switching capability provided by an embodiment of the present disclosure;
FIG. 5 is a flowchart illustrating a method for reporting an antenna switching capability provided by an embodiment of the present disclosure;
FIG. 6 is a flowchart illustrating a method for reporting an antenna switching capability provided by an embodiment of the present disclosure;
FIG. 7 is a flowchart illustrating a method for reporting an antenna switching capability provided by an embodiment of the present disclosure;
FIG. 8 is a flowchart illustrating a method for reporting an antenna switching capability provided by an embodiment of the present disclosure;
FIG. 9 is a schematic diagram illustrating a structure of a communication apparatus provided by an embodiment of the present disclosure;
FIG. 10 is a schematic diagram illustrating a structure of a communication apparatus provided by an embodiment of the present disclosure; and
FIG. 11 is a schematic diagram illustrating a structure of a chip provided by an embodiment of the present disclosure.

### DETAILED DESCRIPTION

Embodiments will be described in detail herein, examples of which are illustrated in the accompanying drawings. When the following description refers to the accompanying drawings, the same or similar elements may be denoted by the same numerals in different accompanying drawings, unless otherwise indicated. The implementations described in the following illustrative embodiments do not represent all implementations consistent with the disclosure. Instead, they are merely examples of apparatuses and methods consistent with aspects of embodiments of the disclosure as detailed in the appended claims.

The terms used in the disclosure are only for the purpose of describing specific embodiments, and are not intended to limit the embodiments of the disclosure. The singular forms of "a" and "the" used in the embodiments of the disclosure and appended claims are also intended to include plural forms, unless the context clearly indicates other meanings. It should also be understood that the term "and/or" as used herein refers to and includes any or all possible combinations of one or more associated listed items.

It is understandable that although the terms "first", "second", and "third" may be used in the embodiments of the disclosure to describe various information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if" as used herein can be interpreted as "when", "while" or "in response to determining".

For the purposes of brevity and comprehensibility, terms "greater than" or "less than", "higher than" or "lower than" are used herein to characterize relationships of size. However, for technicians in the art, it is understood that the term "greater than" also covers the meaning of "greater than or equal to", the term "less than" also covers the meaning of "less than or equal to", the term "higher than" covers the meaning of "higher than or equal to", and the term "lower than" also covers the meaning of "lower than or equal to". For ease of understanding, the terms used in the present disclosure are introduced first.

### 1. Sounding reference signal (SRS)

In a 5th generation (5G) new radio (NR) system, an uplink SRS can be periodic, semi-continuous or non-periodic SRS, narrowband or broadband, single port or multi-port. The uplink SRS parameters are configured from a network device to a terminal, and can be configured to include the number of ports, frequency domain resource allocations, a time domain resource allocations, sequences, sequence cyclic offsets, etc.

The network device can configure multiple uplink SRS resource sets for the terminal, in which one SRS resource set includes one or more SRS resources.

### 2. Antenna switching

NR system supports the network device through channel reciprocity to obtain downlink channel information to improve the transmission capability of downlink data. In order to support the network device in variety of terminal transceiving capabilities can effectively obtain downlink information through the channel reciprocity, SRS reference signals are specially designed in the NR system. For different antenna configurations, SRS resource configurations are also different.

For example, for the terminal with the same number of transmit antenna(s) and receive antenna(s) (T=R), a next generation Node B (gNB) can be configured with at most two SRS resource sets, and there is only one SRS resource in one set, in which the number of ports is equal to the number of the transmit antennas of the terminal. The parameter of one of two SRS resource sets can be configured to be periodic, and the parameter of the other of the two SRS resource sets can be configured to be non-periodic. However, for the terminal with one transmit antenna and two receive antennas (1T2R), the gNB can be configured with at most two SRS resource sets, there are two SRS resources in one set, and each SRS resource has only one port.

In order to better understand a method for reporting an antenna switching capability disclosed in embodiments of the present disclosure, a communication system used in embodiments of the present disclosure is first described below.

The embodiments of the present disclosure provide a communication system. The communication system may include, but is not limited to, one transmitting device and one receiving device. Optionally, the transmitting device can be a terminal, and the receiving device can be a network device.

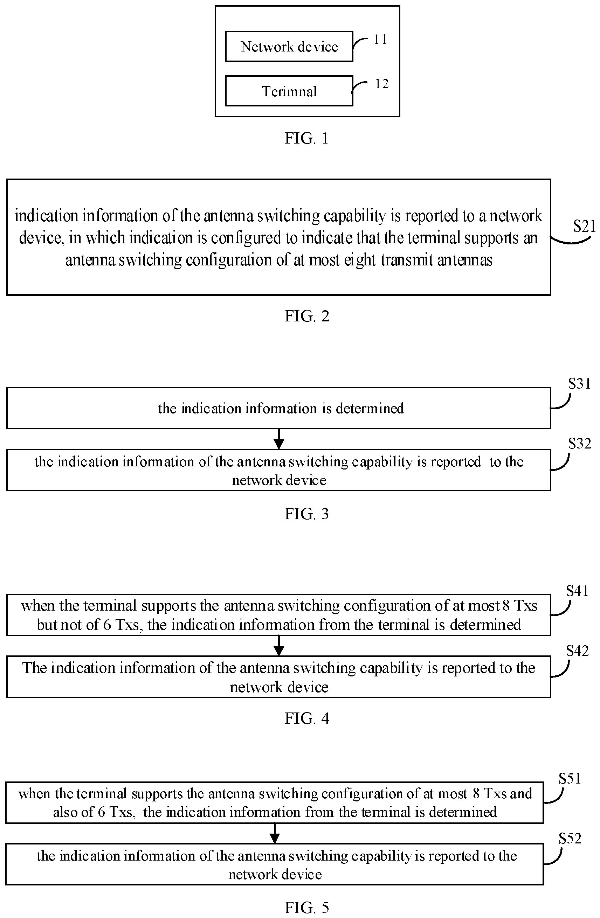

Referring to FIG. 1, FIG. 1 is a schematic diagram illustrating an architecture of a communication system in the embodiments of the present disclosure. The communication system may include, but is not limited to, one network device and one terminal. The number and form of the devices shown in FIG. 1 are merely used as an example, and do not constitute a limitation on embodiments of the present disclosure. In practical applications, two or more network devices and two or more terminals may be included. The communication system shown in FIG. 1 is illustrated as an example where one network device 11 and one terminal 12 are included.

It should be noted that the technical solutions in embodiments of the present disclosure may be applied to various communication systems, such as a long term evolution (LTE) system, a 5G mobile communication system, a 5G NR system, or other new mobile communication systems in the future.

The network device 11 in embodiments of the present disclosure is an entity at a network side for transmitting or receiving signals. For example, the network device 11 may be an evolved NodeB (eNB), a transmission reception point (TRP), a next generation NodeB (gNB) in an NR system, a base station in other future mobile communication systems, or an access node in a wireless fidelity (WiFi) system. Specific technology and specific device form used in the network device are not limited in embodiments of the present disclosure. The network device according to embodiments of the present disclosure may be composed of a central unit (CU) and distributed units (DUs), and the CU may also be referred to as a control unit. Using the CU-DU structure allows to split a protocol layer of the network device, such as a base station, some of functions of the protocol layer is centrally controlled in the CU, some or all of the remaining functions of the protocol layer are distributed in the DUs, and the DUs are centrally controlled by the CU.

The terminal 12 in embodiments of the present disclosure is an entity at a user side for receiving or transmitting signals, such as a mobile phone. The terminal device may also be referred to as a terminal, a user equipment (UE), a mobile station (MS), a mobile terminal (MT) or the like. The terminal device may be a device with a communication function, such as an automobile, a smart automobile, a mobile phone, IoT devices such as NB-IoT or (e)MTC, a wearable device, a pad, a computer with a wireless transceiving function, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, or a wireless terminal device in smart home. The specific technology and the specific device form used in the network device are not limited in embodiments of the present disclosure.

It may be understood that the communication system described in embodiments of the present disclosure is for a purpose of describing the technical solutions of embodiments of the present disclosure more clearly, and does not constitute a limitation on the technical solutions according to embodiments of the present disclosure. It may be understood by those skilled in the art that with the evolution of the system architecture and the emergence of new service scenarios, the technical solutions according to embodiments of the present disclosure are also applicable to similar technical problems.

A method and an apparatus for reporting an antenna switching capability provided in the present disclosure will be described in detail below with reference to the accompanying drawings.

Referring to FIG. 2, FIG. 2 is a flowchart illustrating a method for reporting an antenna switching capability according to embodiments of the present disclosure. As shown in FIG. 2, the method, performed by a terminal, may include, but is not limited to, following steps.

At step S21, indication information of the antenna switching capability is reported to a network device, in which the indication information is configured to indicate that the terminal supports an antenna switching configuration of at most eight transmit antennas (Txs).

The transceiving capability of the terminal can be categorized into those with the same number of transmit antenna(s) and receive antenna(s) (T=R) and those with more receive antennas than transmit antenna(s) (R>T). When the terminal supports 8Tx, the terminal can include the following transceiving capabilities.

For example, transceiving capabilities with the same number of transmit antenna(s) and receive antenna(s) mainly include those with one transmit antenna and one receive antenna (1T1R), those with two transmit antennas and two receive antennas (2T2R), those with four transmit antennas and four receive antennas (4T4R), and those with eight transmit antennas and eight receive antennas (8T8R). Further, for example, transceiving capabilities with more receive antennas than transmit antenna(s) mainly include those with one transmit antenna and two receive antennas (1T2R), those with one transmit antenna and four receive antennas (1T4R), those with two transmit antennas and four receive antennas (2T4R), those with four transmit antennas and eight receive antennas (4T8R), and the like.

In embodiments of the present disclosure, the terminal can include eight Txs, and thus an antenna switching configuration of the terminal can defined based on the eight Txs in an extended manner. For example, the antenna switching configuration of the terminal can include 8T8R. In order to adapt to different services or scenarios, an antenna configuration of the terminal can be switched between a current antenna switching configuration and an extended antenna switching configuration.

There are different antenna switching capabilities for different antenna switching configurations, the network device configures different SRS resources for the terminal with the different antenna switching capabilities accordingly, and therefore, based on the reporting capabilities of the terminal, the network device needs to configure appropriate SRS resources for the reported antenna switching capabilities within the capabilities. In this embodiment, the terminal sends the indication information to the network device, and the indication information can indicate that the terminal supports an antenna switching configuration, in which the antenna switching configuration includes multiple transceiving capabilities supported by the terminal. This allows the network device to know the multiple transceiving capabilities supported by the terminal, and then configure one or more corresponding SRS resources for the terminal according to the multiple transceiving capabilities supported by the terminal. The SRS resources are configured to obtain downlink channel state information (CSI) and thus obtain channel quality.

It should be noted that for the terminal supporting uplink 8 Txs, the antenna configuration of the related 8 Txs can be added in this embodiment to extend the antenna switching configuration, for example, including 8T8R, and is indicated to the network device based on the indication information, which can enable the network device to enhance the corresponding SRS resource configurations.

Optionally, a new antenna switching configuration 8T8R can be defined, and then the indication information includes the new antenna switching configuration 8T8R. In other implementations, the indication information can also include combination information of the antenna switching configurations corresponding to a Tx switch. In yet other implementations, the indication information can also include the combination information of the antenna switching configurations corresponding to the Tx/Rx switch. It is noted that the indication information can include one or more of above indicative contents, and the above indicative contents may be reported to the network device individually or jointly.

Optionally, the terminal can report the indication information to the network device via radio resource control (RRC) signaling or other high-level signalings, which is not limited herein in the embodiments of the present disclosure.

In some implementations, the terminal supports the antenna switching configuration of at most 8 Txs and also of 6 Txs, and then the indication information can include the antenna switching configuration corresponding to 6 Txs. In other implementations, the terminal supports the antenna switching configuration of at most 8 Txs but not of 6 Txs, the indication information can not include the antenna switching configuration corresponding to 6 Txs.

The embodiments of the present disclosure provide the method for reporting the antenna switching capability, which solves the problem of how to report the switching capability when the uplink transmission of the terminal is enhanced to eight transmit antennas, and defines the new reporting method for the terminal supporting 8 Txs. By reporting the indication information of the antenna switching capability to the network device, the network device can configure the suitable SRS resource for the terminal according to the information that the terminal supports the antenna switching capability of 8 Txs.

Referring to FIG. 3, FIG. 3 is a flowchart illustrating a method for reporting an antenna switching capability according to embodiments of the present disclosure. As shown in FIG. 3, the method, performed by a terminal, may include, but is not limited to, following steps.

At step S31, the indication information is determined.

The indication information includes at least one of the following: a new antenna switching configuration, a first antenna switching configuration set corresponding to a Tx switch, and a second antenna switching configuration set corresponding to a Tx/Rx switch.

Since the terminal in this embodiment supports 8Tx, and the number of the receive antennas (Rxs) should be greater than or equal to the transmit antennas (Txs) due to the hardware limitation of the terminal, the new antenna switching configuration includes 8T8R.

The terminal can switch the transmit/receive antennas within the maximum capability supported based on the service. When switching the transmit antennas, the terminal can correspond to the first antenna switching configuration set including the antenna switching configuration of nT8R, in which n is a positive integer less than or equal to 8. When switching the transmit/receive antennas based on 8T8R, the terminal can correspond to the second antenna switching configuration set including the antenna switching configuration of mTkR, in which m and k are both positive integers less than or equal to 8.

For example, the first antenna switching configuration can include 1T8R, 2T8R, 4T8R, and the like.

For example, the second antenna switching configuration can include 1T1R, 1T2R, 1T4R, 1T6R, 2T2R, 2T4R, 2T6R, 4T4R, and the like.

At step S32, the indication information of the antenna switching capability is reported to the network device.

The terminal reports the antenna switching capability to the network device via the indication information, so that the network device can configure one or more corresponding SRS resources for the terminal according to the multiple transceiving capabilities supported by the terminal.

In some implementations, the terminal directly sends the supported antenna switching configuration to the network device.

In some implementations, an index is assigned to each antenna switching configuration, and the index corresponding to the antenna switching configuration supported by the terminal is sent to the network device, so that the network device can determine the antenna switching configuration supported by the terminal according to the index.

The embodiments of the present disclosure provide the method for reporting the antenna switching capability. The antenna switching configuration of the terminal is extended, and by reporting the antenna switching capability to the network device via the indication information, it is possible to solve the problem of how to report the switching capability when the uplink transmission of the terminal is enhanced to eight transmit antennas, and define the new reporting method for the terminal supporting 8 Txs.

Referring to FIG. 4, FIG. 4 is a flowchart illustrating a method for reporting an antenna switching capability according to embodiments of the present disclosure. As shown in FIG. 4, the method, performed by a terminal, may include, but is not limited to, following steps.

At step S41, when the terminal supports the antenna switching configuration of at most 8 Txs but not of 6 Txs, the indication information from the terminal is determined.

The indication information includes at least one of the following: a new antenna switching configuration, a first antenna switching configuration set corresponding to a Tx switch; and a second antenna switching configuration set corresponding to a Tx/Rx switch.

The new antenna switching configuration includes 8T8R.

The first antenna switching configuration set includes a combination of one or more of the following antenna switching configurations.

One transmit chain and eight receive chains 1T8R.

Two transmit chains and eight receive chains 2T8R.

Three transmit chains and eight receive chains 3T8R.

Four transmit chains and eight receive chains 4T8R.

Eight transmit chains and eight receive chains 8T8R.

The chain corresponds to a physical antenna or an antenna port.

For example, the first antenna switching configuration set can be a combination of 1T8R and 2T8R; a combination of 1T8R, 2T8R and 3T8R; a combination of 1T8R, 2T8R and 4T8R; a combination of 1T8R, 2T8R, 4T8R and 8T8R; a combination of 2T8R and 4T8R; a combination of 3T8R and 4T8R; a combination of 2T8R and 8T8R; a combination of 3T8R and 8T8R; a combination of 2T8R, 4T8R and 8T8R; or a combination of 4T8R and 8T8R.

The second antenna switching configuration set includes a combination of one or more of the following antenna switching configurations.

One transmit chain and one receive chain 1T1R.

One transmit chain and two receive chains 1T2R.

One transmit chain and four receive chains 1T4R.

One transmit chain and six receive chains 1T6R.

One transmit chain and eight receive chains 1T8R.

Two transmit chains and two receive chains 2T2R.

Two transmit chains and four receive chains 2T4R.

Two transmit chains and six receive chains 2T6R.

Two transmit chains and eight receive chains 2T8R.

Three transmit chains and four receive chains 3T4R.

Three transmit chains and six receive chains 3T6R.

Three transmit chains and eight receive chains 3T8R.

Four transmit chains and four receive chains 4T4R.

Four transmit chains and six receive chains 4T6R.

Four transmit chains and eight receive chains 4T8R.

Eight transmit chains and eight receive chains 8T8R.

The chain corresponds to a physical antenna or an antenna port.

For example, the second antenna switching configuration set can be a combination of 1T1R and 1T2R; a combination of 1T1R, 1T2R, 1T4R, and 1T6R; a combination of 1T1R, 1T2R, 1T4R, 1T6R, 1T8R, 2T2R, 2T4R, and 2T6R; a combination of 2T2R and 2T4R; a combination of 2T2R, 2T4R, 2T6R, and 2T8R; a combination of 2T2R, 2T4R, 3T6R and 3T8R; a combination of 4T4R, 4T6R, 4T8R and 8T8R; or a combination of 1T1R, 1T2R, 2T2R, 1T4R, 2T4R, 1T6R, 2T6R, 1T8R, 2T8R, 4T8R and 8T8R.

At step S42, the indication information of the antenna switching capability is reported to the network device.

The terminal reports the antenna switching capability to the network device via the indication information, so that the network device can configure one or more corresponding SRS resources for the terminal according to the multiple transceiving capabilities supported by the terminal.

In some implementations, the terminal directly sends the supported antenna switching configuration to the network device.

In some implementations, an index is assigned to each antenna switching configuration, and the index corresponding to the antenna switching configuration supported by the terminal is sent to the network device, so that the network device can determine the antenna switching configuration supported by the terminal according to the index.

The embodiments of the present disclosure provide the method for reporting the antenna switching capability. The method exemplifies the antenna switching configuration included in the indication information, when the terminal does not support the antenna switching configuration of 6Tx. By reporting the antenna switching capability to the network device via the indication information, it is possible to solve the problem of how to report the switching capability when the uplink transmission of the terminal is enhanced to eight transmit antennas, and define the new reporting method for the terminal supporting 8 Txs.

Referring to FIG. 5, FIG. 5 is a flowchart illustrating a method for reporting an antenna switching capability according to embodiments of the present disclosure. As shown in FIG. 5, the method, performed by a terminal, may include, but is not limited to, following steps.

At step S51, when the terminal supports an antenna switching configuration of at most 8Txs and also of 6 Txs, the indication information from the terminal is determined.

The indication information includes at least one of the following: a new antenna switching configuration, a first antenna switching configuration set corresponding to a Tx switch; and a second antenna switching configuration set corresponding to a Tx/Rx switch.

The new antenna switching configuration includes 8T8R.

Compared to the terminal that does not support 6Tx, the first antenna switching configuration set in this embodiment further includes a combination of one or more antenna switching configurations including six transmit chains and eight receive chains 6T8R. At this time, the first antenna switching configuration set includes the following configurations.

One transmit chain and eight receive chains 1T8R.

Two transmit chains and eight receive chains 2T8R.

Three transmit chains and eight receive chains 3T8R.

Four transmit chains and eight receive chains 4T8R.

Six transmit chains and eight receive chains 6T8R.

Eight transmit chains and eight receive chains 8T8R.

The chain corresponds to a physical antenna or an antenna port.

For example, the first antenna switching configuration set can be a combination of 1T8R and 2T8R; a combination of 1T8R, 2T8R, 4T8R, 6T8R and 8T8R; a combination of 2T8R and 4T8R; a combination of 2T8R, 3T8R and 4T8R; a combination of 2T8R, 4T8R, 6T8R and 8T8R; a combination of 4T8R and 6T8R; or a combination of 4T8R, 6T8R and 8T8R.

Compared to the terminal that does not support 6Tx, the second antenna switching configuration set in this embodiment further includes a combination of one or more antenna switching configurations including six transmit chains and eight receive chains 6T8R. At this time, the second antenna switching configuration set includes the following configurations.

One transmit chain and one receive chain 1T1R.

One transmit chain and two receive chains 1T2R.

One transmit chain and four receive chains 1T4R.

One transmit chain and six receive chains 1T6R.

One transmit chain and eight receive chains 1T8R.

Two transmit chains and two receive chains 2T2R.

Two transmit chains and four receive chains 2T4R.

Two transmit chains and six receive chains 2T6R.

Two transmit chains and eight receive chains 2T8R.

Three transmit chains and four receive chains 3T4R.

Three transmit chains and six receive chains 3T6R.

Three transmit chains and eight receive chains 3T8R.

Four transmit chains and four receive chains 4T4R.

Four transmit chains and six receive chains 4T6R.

Four transmit chains and eight receive chains 4T8R.

Six transmit chains and eight receive chains 6T8R.

Eight transmit chains and eight receive chains 8T8R.

The chain corresponds to a physical antenna or an antenna port.

For example, the second antenna switching configuration set can be a combination of 1T1R and 1T2R; a combination of 1T2R, 1T4R, 2T4R, 3T6R, 3T8R, 4T4R, 4T6R, 4T8R, 6T8R and 8T8R; a combination of 1T1R, 1T2R, 1T4R, 1T6R, 1T8R, 2T2R, 2T4R, 2T6R, 2T8R, 4T4R, 4T6R, 4T8R, 6T8R and 8T8R; a combination of 2T2R and 2T4R; a combination of 2T2R, 4T4R, 6T8R and 8T8R; a combination of 6T8R and 8T8R; or a combination of 1T1R, 1T2R, 2T2R, 1T4R, 2T4R, 1T6R, 2T6R, 1T8R, 2T8R, 3T8R and 6T8R.

At step S52, the indication information of the antenna switching capability is reported to the network device.

The terminal reports the antenna switching capability to the network device via the indication information, so that the network device can configure one or more corresponding SRS resources for the terminal according to the multiple transceiving capabilities supported by the terminal.

In some implementations, the terminal directly sends the supported antenna switching configuration to the network device.

In some implementations, an index is assigned to each antenna switching configuration, and the index corresponding to the antenna switching configuration supported by the terminal is sent to the network device, so that the network device can determine the antenna switching configuration supported by the terminal according to the index.

The embodiments of the present disclosure provide the method for reporting the antenna switching capability. The method exemplifies the antenna switching configuration included in the indication information, when the terminal supports the antenna switching configuration of 6Tx. By reporting the antenna switching capability to the network equipment via the indication information, it is possible to solve the problem of how to report the switching capability when the uplink transmission of the terminal is enhanced to eight transmit antennas, and define the new reporting method for the terminal supporting 8 Txs.

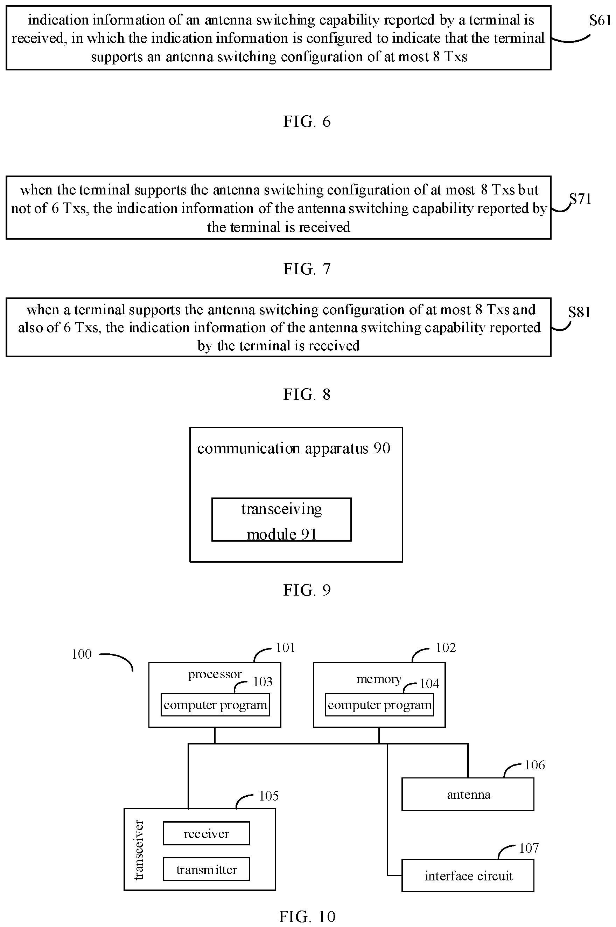

Referring to FIG. 6, FIG. 6 is a flowchart illustrating a method for reporting an antenna switching capability according to embodiments of the present disclosure. As shown in FIG. 6, the method, performed by a network device, may include, but is not limited to, following steps.

At step S61, indication information of the antenna switching capability reported by a terminal is received, in which the indication information is configured to indicate that the terminal supports an antenna switching configuration of at most 8 Txs.

The transceiver capability of the terminal can be categorized into those with the same number of transmit antenna(s) and receive antenna(s) (T=R) and those with more receive antennas than transmit antenna(s) (R>T). When the terminal supports 8Tx, the terminal can include the following transceiving capabilities.

For example, transceiving capabilities with the same number of transmit antenna(s) and receive antenna(s) mainly include those with one transmit antenna and one receive antenna (1T1R), those with two transmit antennas and two receive antennas (2T2R), those with four transmit antennas and four receive antennas (4T4R), and those with eight transmit antennas and eight receive antennas (8T8R). Further, for example, transceiving capabilities with more receive antennas than transmit antenna(s) mainly include those with one transmit antenna and two receive antennas (1T2R), those with one transmit antenna and four receive antennas (1T4R), those with two transmit antennas and four receive antennas (2T4R), those with four transmit antennas and eight receive antennas (4T8R), and the like.

In this embodiment, the network device receives the indication information of the antenna switching capability reported by the terminal, and the indication information can indicate that the terminal supports an antenna switching configuration, in which the antenna switching configuration includes multiple transceiving capabilities supported by the terminal. This allows the network device to know the multiple transceiving capabilities supported by the terminal, and then configure one or more corresponding SRS resources for the terminal according to the multiple transceiving capabilities supported by the terminal. The SRS resources are configured to obtain downlink CSI and thus obtain channel quality.

It should be noted that for the terminal supporting uplink 8 Txs, the antenna configuration of the related 8 Txs can be added in this embodiment to extend the antenna switching configuration, for example, including 8T8R, which can enable the network device to enhance the corresponding SRS resource configurations.

Optionally, the new antenna switching configuration 8T8R can be defined, and then the indication information includes the new antenna switching configuration 8T8R. In other implementations, the indication information can also include combination information of the antenna switching configurations corresponding to a Tx switch. In yet other implementations, the indication information can also include the combination information of the antenna switching configurations corresponding to a Tx/Rx switch. It is noted that the indication information can include one or more of above indicative contents, and the above indicative contents may be reported to the network device individually or jointly.

Optionally, the terminal can report the indication information to the network device via radio resource control (RRC) signaling or other high-level signalings, which is not limited herein in the embodiments of the present disclosure.

In some implementations, the terminal supports the antenna switching configuration of at most 8 Txs and also of 6 Txs, and then the indication information can include the antenna switching configuration corresponding to 6 Txs. In other implementations, the terminal supports the antenna switching configuration of at most 8 Txs but not of 6 Txs, the indication information can not include the antenna switching configuration corresponding to 6 Txs.

The embodiments of the present disclosure provide the method for reporting the antenna switching capability, which solves the problem of how to report the switching capability when the uplink transmission of the terminal is enhanced to eight transmit antennas, and defines the new reporting method for the terminal supporting 8 Txs. By receiving the indication information of the antenna switching capability reported by the terminal, the network device can configure the suitable SRS resource for the terminal according to the information that the terminal supports the antenna switching capability of 8 Txs.

Referring to FIG. 7, FIG. 7 is a flowchart illustrating a method for reporting an antenna switching capability according to embodiments of the present disclosure. As shown in FIG. 7, the method, performed by a network device, may include, but is not limited to, following steps.

At step S71, when a terminal supports an antenna switching configuration of at most 8 Txs but not of 6 Txs, the indication information of the antenna switching capability reported by the terminal is received.

The indication information includes at least one of the following: a new antenna switching configuration, a first antenna switching configuration set corresponding to a Tx switch, and a second antenna switching configuration set corresponding to a Tx/Rx switch.

The new antenna switching configuration at least includes 8T8R. The first antenna switching configuration set includes an antenna switching configuration of nT8R, in which n is a positive integer less than or equal to 8. The second antenna switching configuration set includes an antenna switching configuration of mTkR, in which m and k are both positive integers less than or equal to 8.

For example, the first antenna switching configuration set includes a combination of one or more of the following antenna switching configurations.

One transmit chain and eight receive chains 1T8R.

Two transmit chains and eight receive chains 2T8R.

Three transmit chains and eight receive chains 3T8R.

Four transmit chains and eight receive chains 4T8R.

Eight transmit chains and eight receive chains 8T8R.

The chain corresponds to a physical antenna or an antenna port.

For example, the first antenna switching configuration set can be a combination of 1T8R and 2T8R; a combination of 2T8R, 3T8R and 4T8R; a combination of 1T8R, 2T8R and 4T8R; a combination of 1T8R, 2T8R, 4T8R and 8T8R; a combination of 2T8R and 4T8R; a combination of 2T8R and 8T8R; a combination of 2T8R, 4T8R and 8T8R; or a combination of 4T8R and 8T8R.

For example, the second antenna switching configuration set includes a combination of one or more of the following antenna switching configurations.

One transmit chain and one receive chain 1T1R.

One transmit chain and two receive chains 1T2R.

One transmit chain and four receive chains 1T4R.

One transmit chain and six receive chains 1T6R.

One transmit chain and eight receive chains 1T8R.

Two transmit chains and two receive chains 2T2R.

Two transmit chains and four receive chains 2T4R.

Two transmit chains and six receive chains 2T6R.

Two transmit chains and eight receive chains 2T8R.

Three transmit chains and four receive chains 3T4R.

Three transmit chains and six receive chains 3T6R.

Three transmit chains and eight receive chains 3T8R.

Four transmit chains and four receive chains 4T4R.

Four transmit chains and six receive chains 4T6R.

Four transmit chains and eight receive chains 4T8R.

Eight transmit chains and eight receive chains 8T8R.

The chain corresponds to a physical antenna or an antenna port.

For example, the second antenna switching configuration set can be a combination of 1T1R and 1T2R; a combination of 1T1R, 1T2R, 1T4R, and 1T6R; a combination of 1T2R, 1T4R, 2T4R, 3T6R, 3T8R, 4T4R, 4T6R, 4T8R, 6T8R, and 8T8R; a combination of 1T1R, 1T2R, 1T4R, 1T6R, 1T8R, 2T2R, 2T4R and 2T6R; a combination of 2T2R and 2T4R; a combination of 2T2R, 2T4R, 2T6R and 2T8R; a combination of 4T4R, 4T6R, 4T8R and 8T8R; or a combination of 1T1R, 1T2R, 2T2R, 1T4R, 2T4R, 1T6R, 2T6R, 1T8R, 2T8R, 4T8R and 8T8R.

In some implementations, the indication information includes the antenna switching configuration supported by the terminal.

In some implementations, the indication information includes an index corresponding to the antenna switching configuration supported by the terminal, and the network device can determine the antenna switching configuration supported by the terminal according to the index. Optionally, the correspondence between the antenna switching configuration and the index can be determined by means of network configuration or pre-configuration.

The embodiments of the present disclosure provide the method for reporting the antenna switching capability. The method exemplifies the antenna switching configuration included in the indication information, when the terminal does not support the antenna switching configuration of 6Tx. The network device obtains the antenna switching capability of the terminal via the indication information, thus solving the problem of how to report the switching capability when the uplink transmission of the terminal is enhanced to eight transmit antennas, and defining the new reporting method for the terminal supporting 8 Txs.

Referring to FIG. 8, FIG. 8 is a flowchart illustrating a method for reporting an antenna switching capability according to embodiments of the present disclosure. As shown in FIG. 8, the method, performed by a network device, may include, but is not limited to, following steps.

At step S81, when a terminal supports the antenna switching configuration of at most 8 Txs and also of 6 Txs, the indication information of the antenna switching capability reported by the terminal is received.

The indication information includes at least one of the following: a new antenna switching configuration, a first antenna switching configuration set corresponding to a Tx switch, and a second antenna switching configuration set corresponding to a Tx/Rx switch.

The new antenna switching configuration at least includes 8T8R. The first antenna switching configuration set includes an antenna switching configuration of nT8R, in which n is a positive integer less than or equal to 8. The second antenna switching configuration set includes an antenna switching configuration of mTkR, in which m and k are both positive integers less than or equal to 8.

When the terminal supports the antenna switching configuration of at most 8 Txs and also of 6 Txs, the first antenna switching configuration set and the second antenna switching configuration set further include a combination of one or more antenna switching configurations including 6T8R.

For example, the first antenna switching configuration set includes a combination of one or more of the following antenna switching configurations.

One transmit chain and eight receive chains 1T8R.

Two transmit chains and eight receive chains 2T8R.

Three transmit chains and eight receive chains 3T8R.

Four transmit chains and eight receive chains 4T8R.

Six transmit chains and eight receive chains 6T8R.

Eight transmit chains and eight receive chains 8T8R.

The chain corresponds to a physical antenna or an antenna port.

For example, the first antenna switching configuration set can be a combination of 1T8R and 2T8R; a combination of 1T8R, 2T8R, 4T8R, 6T8R and 8T8R; a combination of 2T8R, 3T8R and 4T8R; a combination of 2T8R and 4T8R; a combination of 2T8R, 4T8R, 6T8R and 8T8R; a combination of 4T8R and 6T8R; or a combination of 4T8R, 6T8R and 8T8R.

For example, the second antenna switching configuration set includes a combination of one or more of the following antenna switching configurations.

One transmit chain and one receive chain 1T1R.

One transmit chain and two receive chains 1T2R.

One transmit chain and four receive chains 1T4R.

One transmit chain and six receive chains 1T6R.

One transmit chain and eight receive chains 1T8R.

Two transmit chains and two receive chains 2T2R.

Two transmit chains and four receive chains 2T4R.

Two transmit chains and six receive chains 2T6R.

Two transmit chains and eight receive chains 2T8R.

Three transmit chains and four receive chains 3T4R.

Three transmit chains and six receive chains 3T6R.

Three transmit chains and eight receive chains 3T8R.

Four transmit chains and four receive chains 4T4R.

Four transmit chains and six receive chains 4T6R.

Four transmit chains and eight receive chains 4T8R.

Six transmit chains and eight receive chains 6T8R.

Eight transmit chains and eight receive chains 8T8R.

The chain corresponds to a physical antenna or an antenna port.

For example, the second antenna switching configuration set can be a combination of 1T1R and 1T2R; a combination of 1T1R, 1T2R, 1T4R, 1T6R, 1T8R, 2T2R, 2T4R, 2T6R, 2T8R, 4T4R, 4T6R, 4T8R, 6T8R and 8T8R; a combination of 1T2R, 1T4R, 2T4R, 3T6R, 3T8R, 4T4R, 4T6R, 4T8R, 6T8R and 8T8R; a combination of 2T2R and 2T4R; a combination of 2T2R, 4T4R, 6T8R and 8T8R; a combination of 6T8R and 8T8R; or a combination of 1T1R, 1T2R, 2T2R, 1T4R, 2T4R, 1T6R, 2T6R, 1T8R, 2T8R and 6T8R.

In some implementations, the indication information includes the antenna switching configuration supported by the terminal.

In some implementations, the indication information includes an index corresponding to the antenna switching configuration supported by the terminal, and the network device can determine the antenna switching configuration supported by the terminal according to the index. Optionally, the correspondence between the antenna switching configuration and the index can be determined by means of network configuration or pre-configuration.

The embodiments of the present disclosure provide the method for reporting the antenna switching capability. The method exemplifies the antenna switching configuration included in the indication information, when the terminal supports the antenna switching configuration of 6Tx. The network device obtains the antenna switching capability of the terminal via the indication information, thus solving the problem of how to report the switching capability when the uplink transmission of the terminal is enhanced to eight transmit antennas, and defining the new reporting method for the terminal supporting 8 Txs.

In the above-mentioned embodiments provided by the present disclosure, the methods according to embodiments of the present disclosure are described from the perspectives of the network device and the terminal, respectively. In order to realize various functions in the methods according to the above-mentioned embodiments of the present disclosure, the network device and the terminal may include a hardware structure and a software module, and the above-mentioned various functions are realized in the form of the hardware structure, the software module, or a combination of the hardware structure and the software module. Some of the functions described above may be performed by the hardware structure, the software module, or the combination of the hardware structure and the software module.

Referring to FIG. 9, FIG. 9 is a schematic diagram illustrating a structure of a communication apparatus 90 according to an embodiment of the present disclosure. The communication apparatus 90 shown in FIG. 9 may include a transceiving module 91. The transceiving module 91 may include a transmitting module and/or a receiving module. The transmitting module is configured to implement a transmitting function, and the receiving module is configured to implement a receiving function. The transceiving module 91 may implement the transmitting function and/or the receiving function.

The communication apparatus 90 may be a terminal, a device in the terminal, or a device that may cooperate with the terminal. Alternatively, the communication apparatus 90 may be a network device, a device in the network device, or a device that may cooperate with the network device.

A communication apparatus 90 is the terminal and includes a tranceiving module 91.

The transceiving module 91 is configured to report indication information of an antenna switching capability to a network device, in which the indication information is configured to indicate that the terminal supports an antenna switching configuration of at most eight Txs.

Optionally, the indication information includes at least one of a new antenna switching configuration; a first antenna switching configuration set corresponding to a Tx switch; and a second antenna switching configuration set corresponding to the Tx/Rx switch.

Optionally, the new antenna switching configuration includes eight Txs and eight Rxs (8T8R).

Optionally, the first antenna switching configuration set includes the antenna switching configuration of n Txs and eight Rxs (nT8R), in which n is a positive integer less than or equal to 8.

Optionally, in response to the terminal supporting the antenna switching configuration of at most 8 Txs but not of 6 Txs, the first antenna switching configuration set includes a combination of one or more of the following antenna switching configurations: one transmit chain and eight receive chains 1T8R; two transmit chains and eight receive chains 2T8R; three transmit chains and eight receive chains 3T8R; four transmit chains and eight receive chains 4T8R; and eight transmit chains and eight receive chains 8T8R, in which the chain corresponds to a physical antenna or an antenna port.

Optionally, the first antenna switching configuration set further includes a combination of one or more of the antenna switching configurations of six transmit chains and eight receive chains 6T8R, in response to the terminal supporting the antenna switching configuration of at most 8 Txs and also of 6 Txs.

Optionally, the second antenna switching configuration set includes the antenna switching configuration of mTkR, in which m and k are both positive integers less than or equal to 8.

Optionally, in response to the terminal supporting the antenna switching configuration of at most 8 Txs but not of 6 Txs, the second antenna switching configuration set includes a combination of one or more of the following antenna switching configurations: one transmit chain and one receive chain 1T1R; one transmit chain and two receive chains 1T2R; one transmit chain and four receive chains 1T4R; one transmit chain and six receive chains 1T6R; one transmit chain and eight receive chains 1T8R; two transmit chains and two receive chains 2T2R; two transmit chains and four receive chains 2T4R; two transmit chains and six receive chains 2T6R; two transmit chains and eight receive chains 2T8R; three transmit chains and four receive chains 3T4R; three transmit chains and six receive chains 3T6R; three transmit chains and eight receive chains 3T8R; four transmit chains and four receive chains 4T4R; four transmit chains and six receive chains 4T6R; four transmit chains and eight receive chains 4T8R; and eight transmit chains and eight receive chains 8T8R, in which the chain corresponds to the physical antenna or the antenna port.

Optionally, the second antenna switching configuration set further includes a combination of one or more of the antenna switching configurations of six transmit chains and eight receive chains 6T8R, in response to the terminal supporting the antenna switching configuration of at most 8 Txs and also of 6 Txs.

The communication apparatus 90 is a network device and includes a transceiving module 91.

The transceiving module 91 is configured to receive indication information of an antenna switching capability reported by a terminal, in which the indication information is configured to indicate that the terminal supports an antenna switching configuration of at most eight Txs.

Optionally, the indication information comprises at least one of the following: a new antenna switching configuration; a first antenna switching configuration set corresponding to a Tx switch; and a second antenna switching configuration set corresponding to the Tx/Rx switch.

Optionally, the new antenna switching configuration includes 8T8R.

Optionally, the first antenna switching configuration set comprises the antenna switching configuration of n Txs and eight Rxs (nT8R), in which n is a positive integer less than or equal to 8.

Optionally, in response to the terminal supporting the antenna switching configuration of at most 8 Txs but not of 6 Txs, the first antenna switching configuration set includes a combination of one or more of the following antenna switching configurations: 1T8R, 2T8R, 3T8R, 4T8R and 8T8R, in which the chain corresponds to the physical antenna or the antenna port.

Optionally, the first antenna switching configuration set further includes a combination of one or more of the antenna switching configurations of six transmit chains and eight receive chains 6T8R, in response to the terminal supporting the antenna switching configuration of at most 8 Txs and also of 6 Txs.

Optionally, the second antenna switching configuration set includes an antenna switching configuration of mTkR, in which m and k are both positive integers less than or equal to 8.

Optionally, in response to the terminal supporting the antenna switching configuration of at most 8 Txs but not of 6 Txs, the second antenna switching configuration set includes a combination of one or more of the following antenna switching configurations: 1T1R, 1T2R, 1T4R, 1T6R, 1T8R, 2T2R, 2T4R, 2T6R, 2T8R, 3T4R, 3T6R, 3T8R, 4T4R, 4T6R, 4T8R and 8T8R, in which the chain corresponds to the physical antenna or the antenna port.

Optionally, the second antenna switching configuration set further includes a combination of one or more of the antenna switching configurations of six transmit chains and eight receive chains 6T8R, in response to the terminal supporting the antenna switching configuration of at most 8 Txs and also of 6 Txs.

Referring to FIG. 10, FIG. 10 is a schematic diagram illustrating a structure of another communication apparatus 100 according to an embodiment of the present disclosure. The communication apparatus 100 may be a terminal or a network device, or may be a chip, a chip system, or a processor supporting the terminal to implement the above-mentioned method, or may be a chip, a chip system or a processor supporting the network device to implement the above-mentioned method. The communication apparatus may be used to implement the methods as described in the method embodiments described above, and details may be referred to the description of the method embodiments described above.

The communication apparatus 100 may include one or more processors 101. The processor 101 may be a general-purpose processor or a special-purpose processor, etc. It may be, for example, a baseband processor or a central processor. The baseband processor may be used to process a communication protocol and communication data, and the central processor may be used to control a communication device (such as a base station, a baseband chip, a terminal device, a terminal device chip, a DU or a CU, etc.), execute a computer program, and process data of the computer program.

Optionally, the communication apparatus 100 may further include one or more memories 102 on which the computer program 104 may be stored, and the processor 101 executes the computer program 104 to cause the communication apparatus 100 to perform the method as described in the above method embodiments. Optionally, the memory 102 may also have data stored therein. The communication apparatus 100 and the memory 102 may be provided independently or integrated together.

Optionally, the communication apparatus 100 may further include a transceiver 105 and an antenna 106. The transceiver 105 may be referred to as a transceiving unit, a transceiving machine, or a transceiving circuit or the like for implementing a transceiving function. The transceiver 105 may include a receiver and a transmitter, the receiver may be referred to as a receiving machine, a receiving circuit or the like for implementing a receiving function; and the transmitter may be referred to as a transmitting machine, a transmission circuit or the like for implementing a transmission function.

Optionally, the communication apparatus 100 may further include one or more interface circuits 107. The interface circuit 107 is configured to receive and transmit a code instruction to the processor 101. The processor 101 executes the code instruction to enable the communication apparatus 100 to perform the method described in any of the above method embodiments.

In an implementation, the processor 101 may include a transceiver for implementing receiving and transmitting functions. For example, the transceiver may be a transceiving circuit, an interface, or an interface circuit. The transceiving circuit, the interface, or the interface circuit for implementing the receiving and transmitting functions may be separate or integrated. The transceiving circuit, the interface or the interface circuit may be configured to read and write code/data, or may be configured to transmit or transfer signals.

In an implementation, the processor 101 may store the computer program 103 that, when run on the processor 101, enables the communication apparatus 100 to perform the method described in any of the above method embodiments. The computer program 103 may be solidified in the processor 101, in which case the processor 101 may be implemented in hardware.

In an implementation, the communication apparatus 100 may include a circuit that may perform the transmitting, receiving or communicating functions in the foregoing method embodiments. The processor and transceiver described in the present disclosure may be implemented on an integrated circuit (IC), an analog IC, a radio frequency integrated circuit (RFIC), a mixed signal IC, an application specific integrated circuit (ASIC), a printed circuit board (PCB), an electronic device, etc. The processor and transceiver may also be fabricated with various IC process technologies, such as complementary metal oxide semiconductor (CMOS), n-metal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication apparatus described in the above embodiments may be a network device or a terminal, but the scope of the communication apparatus described in the present disclosure is not limited thereto. The structure of the communication apparatus may not be limited by FIG. 10. The communication apparatus may be a stand-alone device or may be part of a larger device. For example, the communication apparatus may be the following.
(1) a stand-alone integrated circuit (IC), or a chip, or a chip system or subsystem;
(2) a set of one or more ICs, optionally, the set of ICs may also include a storage component for storing data and computer programs;
(3) an ASIC, such as a modem;
(4) a module that may be embedded in other devices;
(5) a receiver, a terminal device, an intelligent terminal device, a cellular phone, a wireless device, a handheld machine, a mobile unit, a vehicle device, a network device, a cloud device, an artificial intelligence device, etc.;
(6) others.

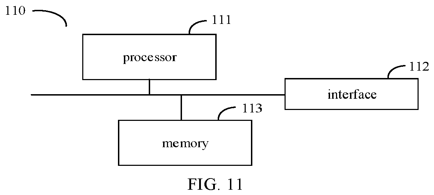

In the case where the communication apparatus may be a chip or a chip system, reference is made to FIG. 11, which is a schematic diagram illustrating a structure of a chip. The chip of FIG. 11 includes a processor 111 and an interface 112. The number of processors 111 may be one or more and the number of interfaces 112 may be more than one.

Optionally, the chip further includes a memory 113 for storing necessary computer programs and data.

Those skilled in the art may also understand that various illustrative logical blocks and steps listed in embodiments of the present disclosure may be implemented by an electronic hardware, a computer software, or a combination thereof. Whether such functions are implemented by a hardware or a software depends on specific applications and design requirements of an overall system. For each specific application, those skilled in the art may use various methods to implement the described functions, but such an implementation should not be understood as extending beyond the protection scope of embodiments of the present disclosure.

An embodiment of the present disclosure further provides a system for reporting an antenna switching capability. The system includes the communication apparatus as the terminal and the communication apparatus as the network device as shown in the embodiment of FIG. 9. Alternatively, the system includes the communication apparatus as the terminal and the communication apparatus as the network device as shown in the embodiment of FIG. 10.

The present disclosure further provides a readable storage medium having stored therein instructions that, when executed by a computer, cause functions of any of the above method embodiments to be implemented.

The present disclosure further provides a computer program product that, when executed by a computer, causes functions of any of the above method embodiments to be implemented.

The above embodiments may be implemented in whole or in part by a software, a hardware, a firmware or any combination thereof. When implemented using the software, the above embodiments may be implemented in whole or in part in a form of the computer program product. The computer program product includes one or more computer programs. When the computer program is loaded and executed on the computer, all or part of the processes or functions according to embodiments of the present disclosure will be generated. The computer may be a general purpose computer, a special purpose computer, a computer network, or other programmable devices. The computer program may be stored in a computer-readable storage medium or transmitted from one computer-readable storage medium to another computer-readable storage medium. For example, the computer program may be transmitted from one website site, computer, server or data center to another website site, computer, server or data center in a wired manner (such as via a coaxial cable, an optical fiber, a digital subscriber line (DSL)) or a wireless manner (such as via infrared, wireless, or microwave, etc.). The computer-readable storage medium may be any available medium that can be accessed by the computer, or a data storage device such as a server or a data center integrated by one or more available media. The ava ilable medium may be a magnetic medium (for example, a floppy disk, a hard disk, or a magnetic tape), an optical medium (for example, a high-density digital video disc (DVD)), or a semiconductor medium (for example, a solid state disk (SSD)) etc.

Those of ordinary skill in the art can understand that the first, second, and other numeral numbers involved in the present disclosure are only for convenience of description, and are not intended to limit the scope of embodiments of the present disclosure, nor are they intended to represent a sequential order.

The term "at least one" used in the present disclosure may also be described as one or more, and the term "a plurality of" may cover two, three, four or more, which are not limited in the present disclosure. In embodiments of the present disclosure, for a certain kind of technical features, the technical features in this kind of technical features are distinguished by terms like "first", "second", "third", "A", "B", "C" and "D", etc., and these technical features described with the "first", "second", "third", "A", "B", "C" and "D" have no order of priority and have no order of size.

The correspondence shown in each table in the present disclosure may be configured or predefined. The values of various information in each table are examples, and may be configured as other values, which are not limited in the present disclosure. When configuring a correspondence between the information and various parameters, it is not necessary to configure all the correspondences shown in the tables. For example, the correspondences shown in some rows of a table in the present disclosure may not be configured. For another example, appropriate deformations or adjustments (such as splitting, merging, and so on) can be made according to the above table. The names of parameters shown in the titles of the above tables may also adopt other names understandable by the communication apparatus/device, and the values or representations of the parameters may also be other values or representations understandable by the communication apparatus. When the above tables are implemented, other data structures may also be used, for example, arrays, queues, containers, stacks, linear tables, pointers, linked lists, trees, graphs, structural body, classes, heaps, or hash tables may be used.

The term "predefinition" in the present disclosure may be understood as definition, definition in advance, storage, pre-storage, pre-negotiation, pre-configuration, curing, or pre-firing.

Those of ordinary skill in the art can appreciate that the units and algorithm steps of various examples described in conjunction with embodiments disclosed herein may be implemented by the electronic hardware, or a combination of the computer software and the electronic hardware. Whether these functions are executed by the hardware or the software depends on the specific applications and design constraints of the technical solution. For each particular application, those skilled in the art may use different methods to implement the described functions, but such implementation should not be considered beyond the scope of the present disclosure.

Those skilled in the art can clearly understand that for the convenience and brevity of the description, the specific working process of the above-described system, device and unit may refer to the corresponding process in the foregoing method embodiments, which will not be repeated here.

The above only describes some specific implementations of the present disclosure, but the protection scope of the present disclosure is not limited thereto. Any changes or substitutions that are conceivable to those skilled in the art within the technical scope of the present disclosure should fall within the protection scope of the present disclosure. Therefore, the protection scope of the present disclosure should be determined by the protection scope of the claims.

## Claims

1. A method for reporting an antenna switching capability, performed by a terminal, comprising:
reporting indication information of the antenna switching capability to a network device, wherein the indication information is configured to indicate that the terminal supports an antenna switching configuration of at most eight transmit antennas, Txs.

2. The method according to claim 1, wherein the indication information comprises at least one of the following:
a new antenna switching configuration;
a first antenna switching configuration set corresponding to a Tx switch; and
a second antenna switching configuration set corresponding to the Tx /a receive, Rx, antenna switch.

3. The method according to claim 2, wherein the new antenna switching configuration comprises eight Txs and eight Rxs, 8T8R.

4. The method according to claim 2, wherein the first antenna switching configuration set comprises the antenna switching configuration of n Txs and eight Rxs, nT8R, wherein n is a positive integer less than or equal to 8.

5. The method according to claim 4, wherein the first antenna switching configuration set comprises a combination of one or more of the following antenna switching configurations, in response to the terminal supporting the antenna switching configuration of at most 8 Txs but not of 6 Txs:
one transmit chain and eight receive chains 1T8R;
two transmit chains and eight receive chains 2T8R;
three transmit chains and eight receive chains 3T8R;
four transmit chains and eight receive chains 4T8R; and
eight transmit chains and eight receive chains 8T8R,
wherein the chain corresponds to a physical antenna or an antenna port.

6. The method according to claim 4, wherein the first antenna switching configuration set further comprises a combination of one or more of the antenna switching configurations of six transmit chains and eight receive chains 6T8R, in response to the terminal supporting the antenna switching configuration of at most 8 Txs and also of 6 Txs.

7. The method according to claim 2, wherein the second antenna switching configuration set comprises an antenna switching configuration of mTkR, wherein m and k are both positive integers less than or equal to 8.

8. The method according to claim 7, wherein the second antenna switching configuration set comprises a combination of one or more of the following antenna switching configurations, in response to the terminal supporting the antenna switching configuration of at most 8 Txs but not of 6 Txs:
one transmit chain and one receive chain 1T1R;
one transmit chain and two receive chains 1T2R;
one transmit chain and four receive chains 1T4R;
one transmit chain and six receive chains 1T6R;
one transmit chain and eight receive chains 1T8R;
two transmit chains and two receive chains 2T2R;
two transmit chains and four receive chains 2T4R;
two transmit chains and six receive chains 2T6R;
two transmit chains and eight receive chains 2T8R;
three transmit chains and four receive chains 3T4R;
three transmit chains and six receive chains 3T6R;
three transmit chains and eight receive chains 3T8R;
four transmit chains and four receive chains 4T4R;
four transmit chains and six receive chains 4T6R;
four transmit chains and eight receive chains 4T8R; and
eight transmit chains and eight receive chains 8T8R;
wherein the chain corresponds to a physical antenna or an antenna port.

9. The method according to claim 7, wherein the second antenna switching configuration set further comprises a combination of one or more of the antenna switching configurations of six transmit chains and eight receive chains 6T8R, in response to the terminal supporting the antenna switching configuration of at most 8 Txs and also of 6 Txs.

10. A method for reporting an antenna switching capability, performed by a network device, comprising:
receiving indication information of the antenna switching capability reported by a terminal, wherein the indication information is configured to indicate that the terminal supports an antenna switching configuration of at most eight transmit antennas, Txs.

11. The method according to claim 9, wherein the indication information comprises at least one of the following:
a new antenna switching configuration;
a first antenna switching configuration set corresponding to a Tx switch; and
a second antenna switching configuration set corresponding to the Tx /a receive, Rx, antenna switch.

12. The method according to claim 11, wherein the new antenna switching configuration comprises eight Txs and eight Rxs, 8T8R.

13. The method according to claim 11, wherein the first antenna switching configuration set comprises the antenna switching configuration of n Txs and eight Rxs, nT8R, wherein n is a positive integer less than or equal to 8.

14. The method according to claim 13, wherein the first antenna switching configuration set comprises a combination of one or more of the following antenna switching configurations, in response to the terminal supporting the antenna switching configuration of at most 8 Txs but not of 6 Txs: 1T8R, 2T8R, 3T8R, 4T8R, 8T8R,
wherein a chain corresponds to a physical antenna or an antenna port.

15. The method according to claim 13, wherein the first antenna switching configuration set further comprises a combination of one or more of the antenna switching configurations of six transmit chains and eight receive chains 6T8R, in response to the terminal supporting the antenna switching configuration of at most 8 Txs and also of 6 Txs.

16. The method according to claim 11, wherein the second antenna switching configuration set comprises an antenna switching configuration of mTkR, wherein m and k are both positive integers less than or equal to 8.

17. The method according to claim 16, wherein the second antenna switching configuration set comprises a combination of one or more of the following antenna switching configurations, in response to the terminal supporting the antenna switching configuration of at most 8 Txs but not of 6 Txs:
1T1R, 1T2R, 1T4R, 1T6R, 1T8R, 2T2R, 2T4R, 2T6R, 2T8R, 3T4R, 3T6R, 3T8R, 4T4R, 4T6R, 4T8R, 8T8R,
wherein a chain corresponds to a physical antenna or an antenna port.

18. The method according to claim 17, wherein the second antenna switching configuration set further comprises a combination of one or more of the antenna switching configurations of six transmit chains and eight receive chains 6T8R, in response to the terminal supporting the antenna switching configuration of at most 8 Txs and also of 6 Txs.

19. A communication apparatus, comprising:
a transceiving module, configured to report indication information of an antenna switching capability to a network device, wherein the indication information is configured to indicate that the terminal supports an antenna switching configuration of at most eight transmit antennas, Txs.

20. A communication apparatus, comprising:
a transceiving module, configured to receive indication information of an antenna switching capability reported by a terminal, wherein the indication information is configured to indicate that the terminal supports an antenna switching configuration of at most eight transmit antennas, Txs.

21. A communication apparatus, comprising: a processor and a memory, wherein
the memory is stored with computer programs; and
the processor is configured to execute the computer programs stored in the memory to make the communication apparatus implement the method according to any one of claims 1 to 9.

22. A communication apparatus, comprising: a processor and a memory, wherein
the memory is stored with computer programs; and
the processor is configured to execute the computer programs stored in the memory to make the communication apparatus implement the method according to any one of claims 10 to 18.

23. A communication apparatus, comprising: a processor and an interface circuit, wherein
the interface circuit is configured to receive code instructions and to transmit the code instructions to the processor; and
the processor is configured to run the code instructions to perform the method of any of claims 1-9.

24. A communication apparatus, comprising: a processor and an interface circuit, wherein
the interface circuit is configured to receive code instructions and to transmit the code instructions to the processor; and
the processor is configured to run the code instructions to perform the method of any of claims 10-18.

25. A computer readable storage medium, configured to store instructions, wherein
when the instructions are executed, the method according to any one of claims 1 to 9 is performed.

26. A computer readable storage medium, configured to store instructions, wherein
when the instructions are executed, the method according to any one of claims 10 to 18 is performed.
